# EUROPEAN PATENT SPECIFICATION

(11) **EP 0 961 649 B1**
(45) Date of publication and mention of the grant of the patent: **03.07.2002**
(21) Application number: 98908316.7
(22) Date of filing: 26.02.1998
(51) Int. Cl.: B01D 29/11, B30B 9/12, B30B 9/18

(54) **A DEVICE FOR SEPARATING A SUBSTANCE INTO SUBSTANTIALLY SOLID MATTER AND SUBSTANTIALLY LIQUID MATTER**
VORRICHTUNG ZUR ABTRENNUNG EINER SUBSTANZ IM WESENTLICHEN IN EINE FESTE UND FLÜSSIGE PHASE
DISPOSITIF DE SEPARATION D'UNE SUBSTANCE EN UNE MATIERE SENSIBLEMENT SOLIDE ET EN UNE MATIERE SENSIBLEMENT LIQUIDE

(30) Priority: 28.02.1997 NL 1005398
(43) Date of publication of application: 08.12.1999
(73) Proprietor: Antonis, Matheus Everardus, 5447 BE Rijkevoort (NL)
(72) Inventor: Antonis, Matheus Everardus, 5447 BE Rijkevoort (NL)
(74) Representative: Fieret, Johannes, Ir.
(86) International application number: NL9800116
(87) International publication number: WO9837942

(56) References cited:
- EP-A- 0 327 737
- EP-A- 0 672 519
- GB-A- 1 506 455
- GB-A- 1 560 455
- US-A- 1 772 262
- US-A- 3 230 865
- US-A- 3 943 033

## Description

The invention relates to a device which is suitable for separating a substance into substantially solid matter and substantially liquid matter, which device comprises an cylindrical, apertured screen and an Archimedean screw forming a squeegee, which is capable of rotation with respect to said screen, by means of which the substance present on the screen is squeezed against and at least partially through the screen.

With a similar device and method, which are known from US-A-3,938,434, a substance is introduced into a cylindrical screen having a thickness of at least 380 µm, which is provided with openings having a minimum dimension of 380 µm. The cylindrical screen is supported along its entire length by a second cylindrical screen surrounding said screen, which is fixed in position by means of axially extending rods and auxiliary brackets. The drawback of this relatively complicated device is that solid matter particles get wedged between the two cylindrical screens, as a result of which clogging of the two screens will occur relatively quickly.

The object of the invention is to provide a device which provides an improved separation of a substance into solid and liquid matter.

This objective is accomplished with the device according to the invention in that the screen has a maximum thickness of 0.3 mm, and in that the openings in the screen have a maximum dimension of 0.3 mm, wherein the side of the screen remote from said Archimedean screw is supported near the ends, with the portion present between said ends being unsupported.

When the maximum dimensions of the openings and the maximum thickness of the screen are reduced simultaneously, there appears to be no clogging of the screen, whilst the smaller dimensions of the openings lead to an improved separation between solid and liquid matter. Preferably the openings have a dimension of maximally 0.01 - 0.1 mm. Such dimensions enable a separation of the substance wherein the liquid matter contains hardly any solid matter.

Such a device is suitable, among other things, for separating a substance, such as manure, into substantially liquid matter, also referred to as thin fraction, and substantially solid, relatively dry matter, also referred to as thick fraction.

One embodiment of the device according to the invention is characterized in that said device is provided with clamping means for clamping down said cylindrical screen in axial direction.

By clamping down the cylindrical screen in axial direction, the screen is pulled against the Archimedean screw in radial direction, thus enabling the Archimedean screw to squeeze the substance against the screen with sufficient force.

Another embodiment of the device according to the invention is characterized in that the device is provided with at least one supply channel for the substance to be separated, which supply channel extends into the screen in at least substantially parallel relationship to the main axis of the screen.

As a result of this the substance is supplied from the central axis of the screen, thus preventing uneven forces being exerted on the screen.

Yet another embodiment of the device according to the invention is characterized in that the device is provided with a closing device near a solid matter outlet side, which closing device is axially movable against spring force, from a first position, in which a solid matter outlet is closed, to a second position, in which the solid matter outlet is open.

The solid matter will be collected near the solid matter outlet side. The solid matter exerts a force on the closing device, whereby the solid matter causes the closing device to move from said first position to said second position, and whereby part of the solid matter can exit the device via the solid matter outlet.

In another embodiment of the device the openings are provided with relatively sharp edges. When the Archimedean screw is being moved with respect to the screen, solid particles that may be partially positioned within an opening are cut through, whereby the cut-through portion that is present in the opening simply exits the relatively thin screen on a side remote from the substance, whilst the other portion that projects from the opening remains behind on the screen.

If the openings open on a side remote from the Archimedean screw, conically for example, particles that have found their way into an opening, such as organic fibres, will simply be forced out of the opening by the Archimedean screw.

Another embodiment of the device according to the invention is characterized in that the Archimedean screw, which forms a squeegee, comprises a conical mandrel and a screw surrounding said mandrel.

The substance is squeezed against the screen by the conical mandrel, in a direction towards the wider portion of the conical mandrel, as a result of which the liquid matter is squeezed out of the solid matter and through the screen.

Another embodiment of the device according to the invention is characterized in that the screen and the Archimedean screw, which is rotatable about an axis, are capable of movement relative each other in the longitudinal direction of said axis.

In this manner the maximum force that is exerted on the substance can be adjusted near the end of the screen.

The invention will be explained in more detail with reference to the drawings, in which:

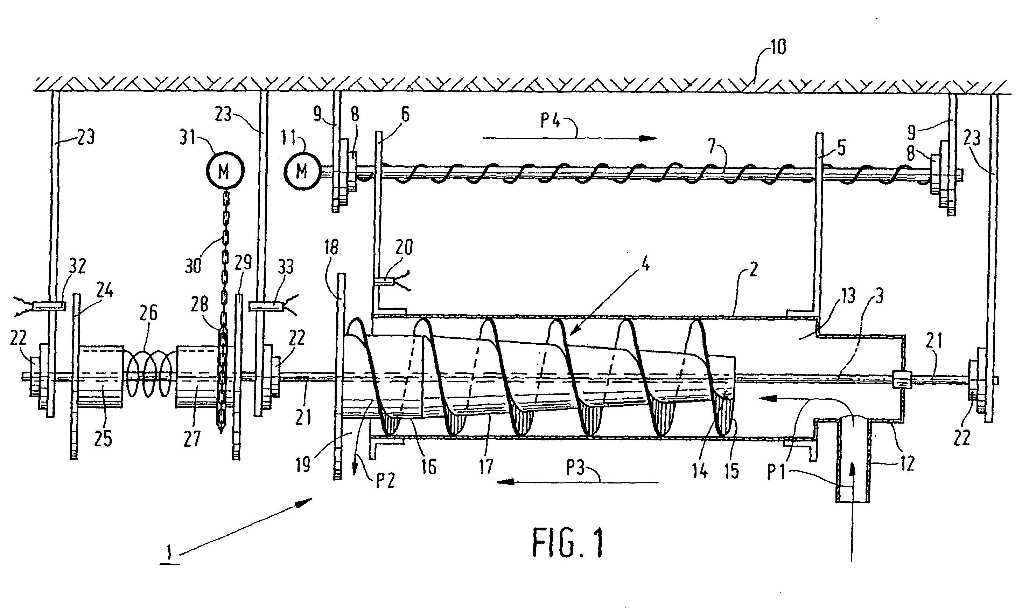

Figure 1 shows a longitudinal section of the device according to the invention;
Figure 2 shows a longitudinal section of a second embodiment of a device according to the invention;
Figure 3 shows a detail of the device shown in Figure 2, wherein the closing device is shown in the closed position thereof; and
Figure 4 shows the detail of Figure 3, wherein the closing device is shown in the open position thereof.

Device 1 comprises an elongated cylindrical screen 2 and an Archimedean screw 4 positioned within screen 2, which is rotatable about a central axis 3. Screen 2 is provided on either end with plates 5, 6 extending transversely to central axis 3, which plates engage, at some distance from central axis 3, round a screwed spindle 7 extending parallel central axis 3. Screwed spindle 7 is supported in bearing blocks 8 on either side of plates 5, 6, which bearing blocks are secured to a fixed structure 10 by means of plates 9. Screwed spindle 7 can be rotated in clockwise as well as in anticlockwise direction by means of a motor 11. Plate 5, which is connected to screen 2, is connected to a supply channel 12 near central axis 3, via which a substance to be separated can be introduced into the space 13 bounded by screen 2, in a direction indicated by arrow P1.

Archimedean screw 4 is provided with a mandrel 14 which extends along central axis 3 and which tapers off towards plate 5, and with a screw 15, which is fastened to mandrel 14. Mandrel 14 comprises a cylindrical portion 16 near plate 6. Cylindrical portion 16 is provided with a plate 18 on a side remote from conical portion 17, which plate extends transversely to central axis 3. A substance present within screen 2 can be discharged in the direction indicated by arrow P2 via the space present between mandrel 14 and screen 2 and the space 19 present between plate 18 and the edge of screen 2 that is positioned near plate 6. Plate 6 is provided with a sensor 20, by means of which the distance to plate 18 can be measured.

Mandrel 14 is secured to a shaft 21 extending along central axis 3, which shaft is supported in bearing blocks 22, which are secured to the fixed structure 10 by means of plates 23. Shaft 21 is provided near the left-hand bearing block, seen in the drawing, with a plate 24, which extends transversely to axis 3, and with a bush 25, which is connected thereto. Bush 25 is connected, via a flexible coupling, for example a torsion spring 26, to a bush 27, which is bearing-mounted on shaft 21, and which comprises a chain wheel 28 and a plate 29 extending transversely to central axis 3. An endless chain 30 is passed over chain wheel 28, which chain is coupled to a motor 31. The fixed plates 23 are provided with sensors 32 and 33 respectively, near plate 24, 29.

Screen 2 is preferably made of a sheet made of a metal, for example nickel, which has a thickness of maximally 0.5 mm, preferably maximally 0.4 mm, and which is provided with openings having a dimension of maximally 0.3 mm, preferably a dimension of 0.01 - 0.1 mm. Plates having such a thickness and such perforations are marketed by Stork, for example under the names of PENTA, NOVA, STANDAARD, CH, HX, etc. The openings in the screen have a relatively sharp edge on a side facing towards the Archimedean screw 14, which forms a squeegee, and preferably said openings taper off on a side remote from the Archimedean screw.

Now the operation of the device 1 according to the invention will be briefly explained. A substance to be separated is introduced into the space 13 bounded by screen 2 via supply channel 12, in the direction indicated by arrow P1. When device 1 is started, plate 18 butts against plate 6, as a result of which outlet 19 is closed. Then motor 31 is started, as a result of which chain 30 is driven and the chain wheel 28 and the bush 27 connected thereto are rotated about central axis 3. The rotation carried out by bush 27 is transmitted to bush 25 via the torsion spring 26 present between bush 27 and bush 25, as a result of which bush 25, the plate 24 connected thereto and the shaft 21 connected thereto are rotated about central axis 3. The rotation of shaft 21 causes the mandrel 14 connected thereto to rotate as well, as a result of which the substance that has been introduced into space 13 is transported in the direction indicated by arrow P3 by screw 15. During the transport of the substance in the direction indicated by arrow P3, the distance between the conical portion 17 of mandrel 14 and the screen 2 becomes smaller, as a result of which the substance is compressed and squeezed against the screen. The liquid matter is squeezed out of the substance and passed through the openings present in screen 2. The solid matter remains behind on screen 2 and is transported along in the direction of transport P3 by means of screw 15, until the solid matter accumulates against plate 18. The torque which is required for rotating shaft 21 about central axis 3 increases as more solid matter accumulates against plate 18, as a result of which the flexible coupling 26 is loaded and bush 27 is pivoted relative to bush 25. At the same time the plates 24, 29 that are connected to bushes 25, 27 pivot relative to each other. The pivoting movement of plates 24, 29 is measured by means of sensors 32 and 33 respectively. The values relating to the angle of rotation of plates 24, 29, which have been measured by means of sensors 32 and 33 respectively, are compared with each other in a control unit (not shown), whereby the exceeding of a predetermined maximum allowable difference in rotation will result in a signal being delivered to motor 11, which signal will cause the motor 11 to start. Motor 11 will drive the screwed spindle 7, as a result of which plates 6, 5 and the screen 2 connected thereto will be driven in the direction indicated by arrow P4. Said transporting of the screen 2 in the direction indicated by arrow P4 will cause outlet 19 to open, as a result of which the substance being squeezed against plate 18 will be discharged in the direction indicated by arrow P2. The driving torque to be delivered by the motor is thus reduced, as a result of which the difference in rotation between plates 24, 29 will decrease, which fact is measured by means of sensors 32, 33. As soon as the difference in rotation is smaller than the maximum allowable difference in rotation that is stored in the control unit, motor 11 will be stopped by means of said control unit. If the dry solid matter being discharged via outlet 19 still contains too much liquid matter, the predetermined maximum allowable value that is stored in the control unit must be increased, so that screen 2 will only be moved in the direction indicated by arrow P4 when the motor torque is higher, that is, when the force being exerted between mandrel 14 and screen 2 is larger.

As soon as the separation of a substance supplied via inlet 12 has been completed, screen 2 will be moved in a direction opposite to arrow P4, until it is detected by means of sensor 20 that plate 6 butts against plate 18, which means that outlet 19 is closed.

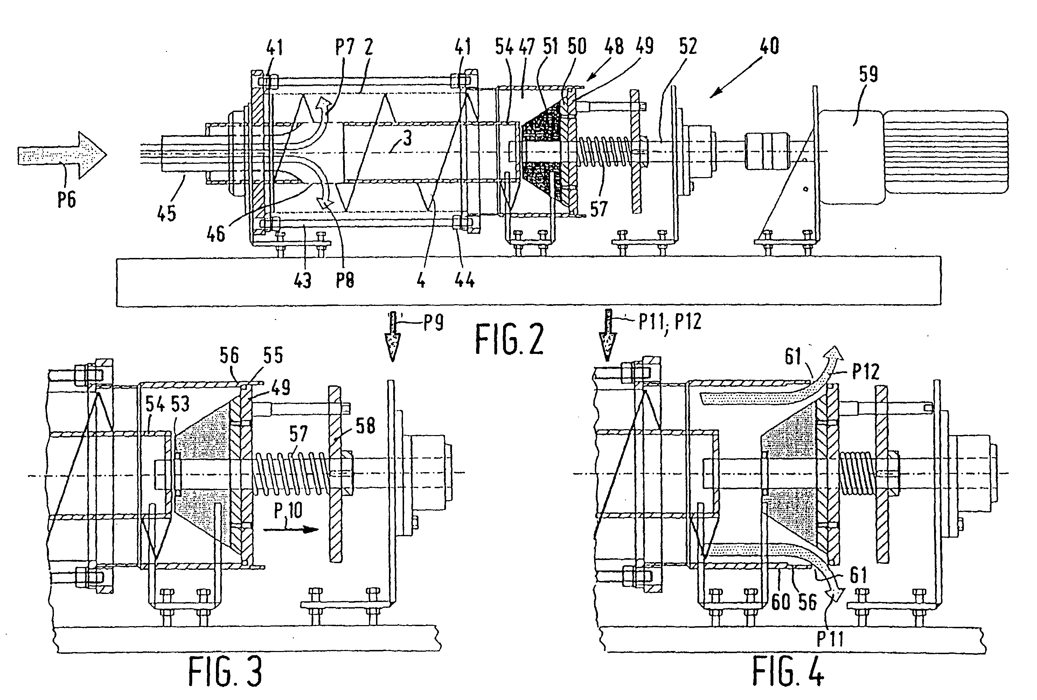

Figures 2 - 4 show a second embodiment of a device 40 according to the invention, which comprises a cylindrical screen 40, which is connected near both its ends to an annular disc 41, 42, between which studs 43 extend. Studs 43 are provided with nuts 44 near the ends, whereby the distance between rings 41, 42 can be adjusted over a relatively small distance by turning the nuts 44, as a result of which screen 2 can be clamped down in axial direction, and a desired compression force can be provided between squeegee 4 and the inner side of screen 2. Device 40 is furthermore provided with a tubular supply channel 45, which extends parallel to central axis 3 of screen 2, and which opens into the space bounded by screen 2 via inlet openings 46 from the interior of squeegee 4. Device 40 is provided on a side remote from supply channel 45 with a solid matter outlet chamber 47, which is bounded by a closing device 48 on a side remote from screen 2. Closing device 48 comprises a plate 49, which is rigidly connected to Archimedean screw 4, and a conical plate 50, which is likewise rigidly connected thereto. Closing device 48 furthermore comprises a cone 51, which is freely rotatable about drive shaft 52 of Archimedean screw 4, and which axially bears against plate 50. A seal 53 is provided between cone 51 and shaft 52 (see Figure 3). The smallest diameter of cone 51 is smaller than the diameter of cylindrical mandrel 54 of Archimedean screw 4. Plate 49 bears against a shoulder 56 by means of an O-ring 55, on a side facing towards screen 2. Plate 49 is pressed in a direction towards the solid matter inlet space 47 by means of a spring 57. Spring 47 butts against an axially adjustable plate 58 on a side remote from plate 49, by means of which plate 58 the spring force exerted by the spring can be adjusted.

The operation of device 40 is as follows. A substance to be separated is introduced into device 40, via supply channel 45, in a direction indicated by arrow P6, which substance is subsequently carried in the direction indicated by arrows P7, P8, via openings 46, into the space bounded by screen 2. Archimedean screw 4 is rotated by means of motor 59, whereby the substance is squeezed against and partially through screen 2. The liquid matter exits device 40 in the direction indicated by arrow P9. The remaining solid matter is carried into solid matter outlet chamber 47 by means of Archimedean screw 4, at which location an accumulation of solid matter will take place. The solid matter is pressed against cone 51 by Archimedean screw 4, whereby cone 51 will remain stationary with respect to the screen as a result of the forces being exerted on said cone 51, whilst plates 49, 50 will continue to rotate. The force being exerted on the solid matter will become relatively large, in particular near plates 49, 50, as a result of which any residual liquid will be squeezed out of the solid matter and be carried in a direction away from plates 49, 50. As soon as a relatively large amount of solid matter has collected against cone 51, the Archimedean screw will exert such a force on said solid matter that the cone 51 and the plates 50 and 49 butting against said cone will be moved in a direction indicated by arrow P10, until cone 51 has moved from the position shown in Figure 3 to the position shown in Figure 4. A gap-like opening 61 is thereby formed between plate 49 and a bush 60 comprising shoulder 56, via which opening the solid matter will exit the device 40 in the direction indicated by arrows P11, P12. As long as the force which the Archimedean screw exerts on cone 51 via the solid matter is sufficiently large, opening 61 will remain open. As soon as this forces decreases, however, the closing device 48 will be moved in a direction opposite the direction indicated by arrow P10 by the spring force of spring 57, and opening 61 will be closed again. Since the closing device 48 must first be moved a certain distance from the position shown in Figure 3 before it reaches the position shown in Figure 4, it is ensured that a relatively large amount of solid matter is present in the solid matter outlet chamber 47 before the closing device 48 is opened. In this manner liquid is prevented from exiting the device 40 via outlet 61, also when the device is being started.

It is noted that Archimedean screw 4 extends beyond the end of screen 2 into the solid matter outlet chamber 47. The accumulating amount of solid matter thus prevents an undesirable pressure build-up on screen 2.

Device 1 is suitable for separating substances into solid and liquid constituents, wherein the substance may comprise manure, preserved food washing water, paper pulp, offal, food scraps, sludge having a well-defined structure, and the like. The method and the device are suitable for use in the manure-processing industry, the paper industry, beer production, the potato industry, cheese production, and the like. The device and the method are in particular suitable for separating substances into solid and liquid constituents, wherein no deposition of solid constituents takes place.

## Claims

1. A device (1) for separating a substance into substantially solid matter and substantially liquid matter, which device comprises an cylindrical, apertured screen (2) and an Archimedean screw (4) forming a squeegee, which is capable of rotation with respect to said screen (2), by means of which the substance present on the screen is squee zed against and at least partially through the screen, **characterized in that** the screen has a maximum thickness of 0.3 mm, and **in that** the openings in the screen have a maximum dimension of 0.3 mm, wherein the side of the screen remote from said Archimedean screw is supported near the ends, and wherein the portion extending between said ends is unsupported.

2. A device according to claim 1, **characterized in that** said openings have a maximum dimension of 0.01 - 0.1 mm.

3. A device according to any one of the preceding claims, **characterized in that** said device is provided with clamping means for clamping down the cylindrical screen in axial direction.

4. A device according to any one of the preceding claims, **characterized in that** said device comprises at least one supply channel (12) for the substance to be separated, which supply channel extends into the screen in at least substantially parallel relationship to the main axis of the screen.

5. A device according to any one of the preceding claims, **characterized in that** said device is provided near a solid matter outlet side with a closing device, which closing device is axially movable against spring force, from a first position, in which a solid matter outlet is closed, to a second position, in which the solid matter outlet is open.

6. A device according to claim 5, **characterized in that** said closing device comprises a cone (51) which is stationary with respect to the screen, and a plate positioned near the relatively wide end of the cone, which plate is coupled to the Archimedean screw, whereby the relative narrow end of said cone is directed towards the spaced bounded by the screen.

7. A device according to claim 6, **characterized in that** the diameter of the relatively narrow end of the cone (51) is smaller than the diameter of a mandrel (14) of the Archimedean screw (4).

8. A device according to any one of the claims 5 - 7, **characterized in that** the spring force is adjustable.

9. A device according to any one of the claims 5 - 8, **characterized in that** said Archimedean screw extends beyond the end of the screen on the solid matter outlet side.

10. A device according to any one of the preceding claims, **characterized in that** said openings have sharp edges on a side facing towards the squeegee.

11. A device according to any one of the preceding claims, **characterized in that** said openings open on a side remote from the squeegee.

12. A device according to any one of the preceding claims, **characterized in that** the Archimedean screw, which forms a squeegee, is provided with a conical mandrel (14) and a screw (15) surrounding said mandrel.

13. A device according to any one of the preceding claims, **characterized in that** said screen and said Archimedean screw, which is rotatable about an axis, are capable of movement relative to each other in the longitudinal direction of said axis.

14. A device according to any one of the preceding claims, **characterized in that** said Archimedean screw is connected to a motor (31) via a flexible coupling, for example a torsion spring (26).

15. A device according to any one of the preceding claims, **characterized in that** said device is provided with a measuring element (32, 33) for measuring a difference in rotation between said motor and said Archimedean screw, wherein said Archimedean screw and said screen are moved relative to each other in dependence on the measured difference in rotation.

16. A device according to any one of the preceding claims, **characterized in that** said Archimedean screw is provided on a wider side of said mandrel with a plate (18) which extends transversely to said axis, wherein a space (19) present between said plate and said cylindrical screen forms an outlet, whilst the device is provided near a narrower side of the mandrel with an inlet into the space within said cylindrical screen.

## Patentansprüche

1. Vorrichtung (1) zur Abtrennung einer Substanz im wesentlichen in eine feste und eine flüssige Phase, umfassend ein mit Öffnungen versehenes Trommelsieb (2) und eine Förderschnecke (4), welche einen Quetscher bildet, die sich im Verhältnis zum genannten Sieb (2) drehen kann, wodurch die am Sieb vorhandene Substanz gegen und zumindest teilweise durch das Sieb gedrückt wird, **dadurch gekennzeichnet, daß** das Sieb eine maximale Dicke von 0,3 mm hat und die Öffnungen im Sieb eine maximale Abmessung von 0,3 mm haben, wobei das Sieb auf seiner von der genannten Förderschnecke entfernt angeordneten Seite in der Nähe der Enden gehalten wird und wobei der Abschnitt, der sich zwischen den genannten Enden erstreckt, nicht gehalten wird.

2. Vorrichtung nach Anspruch 1, **dadurch gekennzeichnet, daß** die genannten Öffnungen eine maximale Abmessung von 0,01 - 0,1 mm haben.

3. Vorrichtung nach einem der vorstehenden Ansprüche, **dadurch gekennzeichnet, daß** die genannte Vorrichtung mit Spannmitteln zum Festspannen des Trommelsiebs in axialer Richtung versehen ist.

4. Vorrichtung nach einem der vorstehenden Ansprüche, **dadurch gekennzeichnet, daß** die genannte Vorrichtung mindestens einen Speisekanal (12) für die zu trennende Substanz umfaßt, der sich zumindest im wesentlichen parallel zur Hauptachse des Siebs in das Sieb erstreckt.

5. Vorrichtung nach einem der vorstehenden Ansprüche, **dadurch gekennzeichnet, daß** die genannte Vorrichtung in der Nähe eines Feststoffauslasses mit einer Schließvorrichtung versehen ist, die in axialer Richtung gegen eine Federkraft beweglich ist von einer ersten Position, in der ein Feststoffauslaß geschlossen ist, in eine zweite Position, in der der Feststoffauslaß geöffnet ist.

6. Vorrichtung nach Anspruch 5, **dadurch gekennzeichnet, daß** die genannte Schließvorrichtung einen Kegel (51) umfaßt, der im Verhältnis zum Sieb feststehend ist, und eine Platte, die in der Nähe des relativ breiten Endes des Kegels angeordnet ist, wobei die genannte Platte an die Förderschnecke angekuppelt ist, wodurch das relativ schmale Ende des genannten Kegels in Richtung des Raums weist, der durch das Sieb begrenzt wird.

7. Vorrichtung nach Anspruch 6, **dadurch gekennzeichnet, daß** der Durchmesser des relativ schmalen Endes des Kegels (51) kleiner ist als der Durchmesser eines Kerns (14) der Förderschnecke (4).

8. Vorrichtung nach einem der Ansprüche 5 - 7, **dadurch gekennzeichnet, daß** die Federkraft verstellbar ist.

9. Vorrichtung nach einem der Ansprüche 5 - 8, **dadurch gekennzeichnet, daß** sich die genannte Förderschnecke an der Seite des Feststoffauslasses über das Ende des Siebs hinaus erstreckt.

10. Vorrichtung nach einem der vorstehenden Ansprüche, **dadurch gekennzeichnet, daß** die genannten Öffnungen auf einer Seite, die zum Quetscher weist, mit scharfen Kanten versehen sind.

11. Vorrichtung nach einem der vorstehenden Ansprüche, **dadurch gekennzeichnet, daß** sich die genannten Öffnungen zu einer vom Quetscher entfernt angeordneten Seite hin öffnen.

12. Vorrichtung nach einem der vorstehenden Ansprüche, **dadurch gekennzeichnet, daß** die Förderschnecke, die einen Quetscher bildet, mit einem konischen Kern (14) und einer den genannten Kern umgebenden Schnecke (15) versehen ist.

13. Vorrichtung nach einem der vorstehenden Ansprüche, **dadurch gekennzeichnet, daß** das genannte Sieb und die genannte Förderschnecke, die um eine Achse drehbar ist, sich im Verhältnis zueinander in Längsrichtung der genannten Achse bewegen können.

14. Vorrichtung nach einem der vorstehenden Ansprüche, **dadurch gekennzeichnet, daß** die genannte Förderschnecke über eine flexible Kupplung, zum Beispiel eine Torsionsfeder (26) mit einem Motor (31) verbunden ist.

15. Vorrichtung nach einem der vorstehenden Ansprüche, **dadurch gekennzeichnet, daß** die genannte Vorrichtung mit einem Meßelement (32, 33) für die Messung eines Unterschieds in der Drehung zwischen dem genannten Motor und der genannten Förderschnecke versehen ist, wobei die genannte Förderschnecke und das genannte Sieb im Verhältnis zueinander in Abhängigkeit von dem gemessenen Unterschied in der Drehung bewegt werden.

16. Vorrichtung nach einem der vorstehenden Ansprüche, **dadurch gekennzeichnet, daß** die genannte Förderschnecke auf einer breiteren Seite des genannten Kerns mit einer Platte (18) versehen ist, die sich in Querrichtung zur genannten Achse erstreckt, wobei ein Raum (19) zwischen der genannten Platte und dem genannten Trommelsieb einen Auslaß bildet, während die Vorrichtung in der Nähe einer schmaleren Seite des Kerns mit einem Einlaß in den Raum innerhalb des genannten Trommelsiebs versehen ist.

## Revendications

1. Dispositif (1) pour séparer une substance en matière sensiblement solide et en matière sensiblement liquide, ledit dispositif comprenant un crible cylindrique à trous (2) et une vis d'Archimède (4) formant un racloir, qui est capable de tourner par rapport audit crible (2), au moyen de laquelle la substance présente sur le crible est pressée contre et au moins partiellement à travers le crible, **caractérisé en ce que** le crible a une épaisseur maximale de 0,3 mm, et **en ce que** les ouvertures dans le crible ont une dimension maximale de 0,3 mm, le côté de l'écran distant de ladite vis d'Archimède étant soutenu près des extrémités, et la partie s'étendant entre lesdites extrémités n'est pas soutenue.

2. Dispositif selon la revendication 1, **caractérisé en ce que** lesdites ouvertures ont une dimension maximale de 0,01 à 0,1 mm.

3. Dispositif selon l'une quelconque des revendications précédentes, **caractérisé en ce que** ledit dispositif comprend un moyen de serrage pour serrer le crible cylindrique dans la direction axiale.

4. Dispositif selon l'une quelconque des revendications précédentes, **caractérisé en ce que** ledit dispositif comprend au moins un canal d'alimentation (12) de substance à séparer, ledit canal d'alimentation s'étendant dans le crible dans une direction au moins sensiblement parallèle par rapport à l'axe principal du crible.

5. Dispositif selon l'une quelconque des revendications précédentes, **caractérisé en ce que** ledit dispositif comprend à proximité d'une extrémité de sortie de matières solides un dispositif de fermeture, ledit dispositif de fermeture étant mobile de manière axiale contre une force de rappel, depuis une première position, dans laquelle une sortie de matières solide est fermée, vers une deuxième position, dans laquelle la sortie de matières solide est ouverte.

6. Dispositif selon la revendication 5, **caractérisé en ce que** ledit dispositif de fermeture comprend un cône (51) qui est stationnaire par rapport au crible, et une plaque positionnée près de l'extrémité relativement large du cône, ladite plaque étant couplée à la vis d'Archimède, de sorte que l'extrémité relativement étroite dudit cône soit dirigée dans la direction de l'espace délimité par le crible.

7. Dispositif selon la revendication 6, **caractérisé en ce que** le diamètre de l'extrémité relativement étroite du cône (51) est inférieur au diamètre de l'arbre (14) de la vis d'Archimède (4).

8. Dispositif selon l'une quelconque des revendications 5 à 7, **caractérisé en ce que** la force de rappel est réglable.

9. Dispositif selon l'une quelconque des revendications 5 à 8, **caractérisé en ce que** ladite vis d'Archimède s'étend au-delà de l'extrémité du crible du côté de la sortie de matières solides.

10. Dispositif selon l'une quelconque des revendications précédentes, **caractérisé en ce que** lesdites ouvertures ont des bords aiguisés sur un côté face au racloir.

11. Dispositif selon l'une quelconque des revendications précédentes, **caractérisé en ce que** lesdites ouvertures s'ouvrent sur un côté distant du racloir.

12. Dispositif selon l'une quelconque des revendications précédentes, **caractérisé en ce que** la vis d'Archimède, qui forme un racloir, comprend un arbre conique (14) et une vis (15) entourant ledit arbre.

13. Dispositif selon l'une quelconque des revendications précédentes, **caractérisé en ce que** ledit crible et ladite vis d'Archimède, qui peut tourner autour d'un axe, sont capables de mouvement relatif l'un par rapport à l'autre dans la direction longitudinale dudit axe.

14. Dispositif selon l'une quelconque des revendications précédentes, **caractérisé en ce que** ladite vis d'Archimède est connectée à un moteur (31) par l'intermédiaire d'un accouplement flexible, par exemple, une barre de torsion (26).

15. Dispositif selon l'une quelconque des revendications précédentes, **caractérisé en ce que** ledit dispositif comprend un élément de mesure (32, 33) pour mesurer la différence de rotation entre ledit moteur et ladite vis d'Archimède, ladite vis d'Archimède et ledit crible étant déplacés l'un par rapport à l'autre en fonction de la différence de rotation mesurée.

16. Dispositif selon l'une quelconque des revendications précédentes, **caractérisé en ce que** ladite vis d'Archimède comprend sur le côté plus large dudit arbre une plaque (18) qui s'étend transversalement par rapport audit axe, un espacement (19) présent entre ladite plaque et ledit crible cylindrique formant une sortie, et le dispositif comprend près du côté plus étroit de l'arbre une entrée vers l'espacement à l'intérieur dudit crible cylindrique.
